# EUROPEAN PATENT APPLICATION

(11) **EP 3 981 620 A1**
(43) Date of publication of application: **13.04.2022**
(21) Application number: 20201415.5
(22) Date of filing: 12.10.2020
(51) Int. Cl.: B60H 1/00, F24F 13/14

(54) **AIR FLOW CONTROL DEVICE**

(71) Applicant: Valeo Klimasysteme GmbH, 96476 Bad Rodach (DE)
(72) Inventor: FRENZEL, Stefan, 96476 BAD RODACH (DE)
(74) Representative: Valeo Systèmes Thermiques

(57) **Abstract**

Air flow control device (1), in particular for a heating, ventilation and/or air conditioning installation for automotive vehicles, comprising: an air circulation channel, a movable flap positioned in the air circulation channel, to regulate an opening degree of the air circulation channel, at least one actuator (7) configured to actuate the flap between a position wherein the air circulation channel is opened and a position wherein the air circulation channel is closed, a torque transmission system (8), configured to transmit a torque from the at least one actuator (7) to the flap, wherein the torque transmission system (8) is configured to transmit the torque on two driven locations (9a) of the flap, the two driven locations (9a) being symmetrical in relation to a middle of the flap.

## Description

The present invention refers to an air flow control device, in particular for a heating, ventilation and/or air conditioning installation (HVAC) for automotive vehicles.

HVAC installations generally comprise flaps for the purpose of controlling the opening and closing of air inlet ports. These flaps may also be called dampers. Such flaps may be butterfly type flaps, flag type flaps, or barrel type flaps, barrel type flaps having the shape of a hollow cylinder.

These arrangements require perfect hermeticity to prevent air flow from escaping. Flap sealing lips can be provided as sealing element. When the flap is in the aperture closing position, these lips are intended to be pressed against an edge of an aperture. The aperture is intented to be closed by the flap. This creates a junction the function whereof is to ensure hermetic air sealing.

In the prior art, the flaps are driven by an actuator operating the flap for example via an individual cam track. The operating torque to each flap is transmitted individually via several levers and gear levers.

Actuator, CAM tracks, levers and gear levers are positioned on a single side of the flap only, so the applied torque is transmitted from the actuator to the flap asymmetrically. This is causing the deformation of the flap sealing lips. The pressing force applied to the flap's lips next to the actuator and gear side (powered side of the flap) will be sufficient, but will decrease in the flap's direction between the powered side and an unpowered side of the flap, with a potential risk of air leakage on the unpowered side. This risk will increase equally to the length of the flaps and their radius.

The present invention will provide a solution for larger apertures, in particular air intake apertures or openings, and a reduced leakage risk.

The present invention relates to an air flow control device, in particular for a heating, ventilation and/or air conditioning installation for automotive vehicles comprising :
- an air circulation channel,
- a movable flap positioned in the air circulation channel, to regulate an opening degree of the air circulation channel,
- at least one actuator configured to actuate the flap between a position wherein the air circulation channel is opened and a position wherein the air circulation channel is closed,
- a torque transmission system, configured to transmit a torque from the at least one actuator to the flap,
characterized in that the torque transmission system is configured to transmit the torque on two driven locations of the flap, the two driven locations being symmetrical in relation to a middle of the flap.

The torque is transmitted symmetrically from a first driven location to a second driven location. Thereby the sealing lips of the air inlet flap is also pressed symmetrically to the housing stop surfaces. The air tightness is improved.

According to one or more embodiments, the two driven locations are opposite locations of the flap.

According to one or more embodiments, the torque transmission system comprises at least two actuating gear segments and at least two actuated gear segments actuated by the actuating gear segments, the actuating gear segments being located at each one of the two driven locations and the actuated gear segments being located at each one of the two driven locations.

According to one or more embodiments, the torque transmission system comprises a cam track.

According to one or more embodiments, a first actuating gear segment is located at a first driven location of the flap and a second actuating gear segment is located at a second driven location of the flap, a first actuated gear segment being located at the first driven location of the flap and a second actuated gear segment being located at the second driven location of the flap.

According to one or more embodiments, the flap has at least one bearing, in particular two bearings, the at least one bearing being located at one of the driven locations.

According to one or more embodiments, a first bearing is located at the first driven location of the flap and a second bearing is located at the second driven location of the flap.

The torque is transmitted symmetrically from a first bearing side to a second bearing side.

According to one or more embodiments, the torque transmission system comprises a shaft extending between two actuating gear segments attached on each ends of the shaft, the two driven locations being symmetrical in relation to a middle of the shaft.

According to one or more embodiments, the shaft extends in a longitudinal direction between two ends of the shaft, on a length of the shaft and the two driven locations are symmetrical in relation to a middle of the length of the shaft.

According to one or more embodiments, the first actuating gear segment is attached at a first end of the shaft and the second actuating gear segment is attached at a second end of the shaft.

According to one or more embodiments, the flap has the shape of a portion of a hollow right circular cylinder having a swivel axis, the two driven locations being symmetrical in relation to a middle of the swivel axis.

According to one or more embodiments, the swivel axis extends in a longitudinal direction between two ends of the swivel axis, on a length of the swivel axis and the two driven locations are symmetrical in relation to a middle of the length of the swivel axis.

According to one or more embodiments, the at least two actuated gear segments are attached on each ends of the swivel axis of the flap.

According to one or more embodiments, the first actuated gear segment is attached on a first end of the swivel axis and the second actuated gear segment is attached on a second end of the swivel axis.

According to one or more embodiments, the first bearing is located at the first end of the swivel axis and the second bearing is located at the second end of the swivel axis.

According to one or more embodiments, the shaft extends parallel to the swivel axis of the flap.

According to one or more embodiments, the shaft traverses the swiveling width of the cylinder flap.

According to one or more embodiments, a second flap fits inside the flap, called first flap and the first and second flaps have a common swivel axis.

According to one or more embodiments, the torque transmission system is configured to transmit the torque to the second flap.

According to one or more embodiments, the torque transmission system is configured to transmit the torque on two driven locations of the second flap, the two driven locations being symmetrical in relation to a middle of the second flap.

Operating torque is transmitted individually to each of the first and second flap via several levers and gear levers.

According to one or more embodiments, the air flow control device comprises a housing.

According to one or more embodiments, the housing comprises at least one aperture making it possible for air to enter the air flow control device, in particular to enter the air circulation channel.

According to one or more embodiments, the at least one aperture comprises a portion of sealing.

According to one or more embodiments, the flap is supported by the housing to open and close the at least one aperture.

According to one or more embodiments, the flap is inserted within the housing.

According to one or more embodiments, the flap is capable of displacement between two distinct extreme positions. In such two extreme positions the flap operates to close and/or open the aperture.

According to one or more embodiments, the aperture is a first aperture permitting the intake of a flow of recycled air and a second aperture makes it possible for a flow of fresh air to enter the air flow control device.

According to one or more embodiments, the housing comprises an air intake housing and the flap is supported by the air intake housing.

Further advantages and a description of the present invention are provided in the statement below referring to the appended drawings provided as a specific embodiment of the present invention wherein :
Figure 1 is a view of the air flow control device according to the present invention.

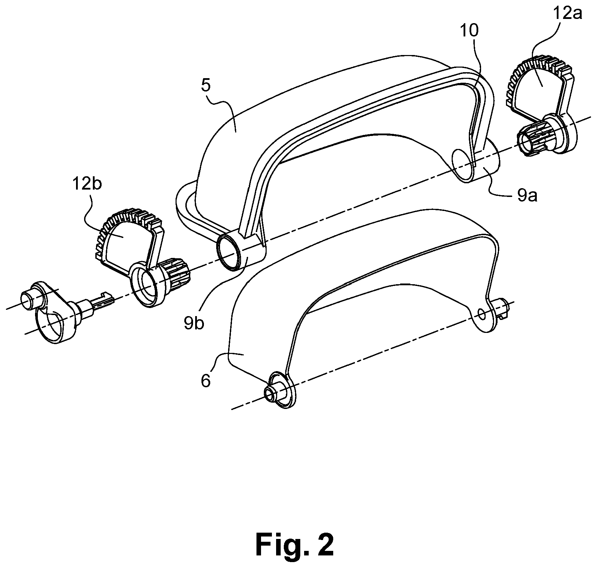

Figure 2 is an exploded view of the first and second flaps according to one or more embodiments of the invention.

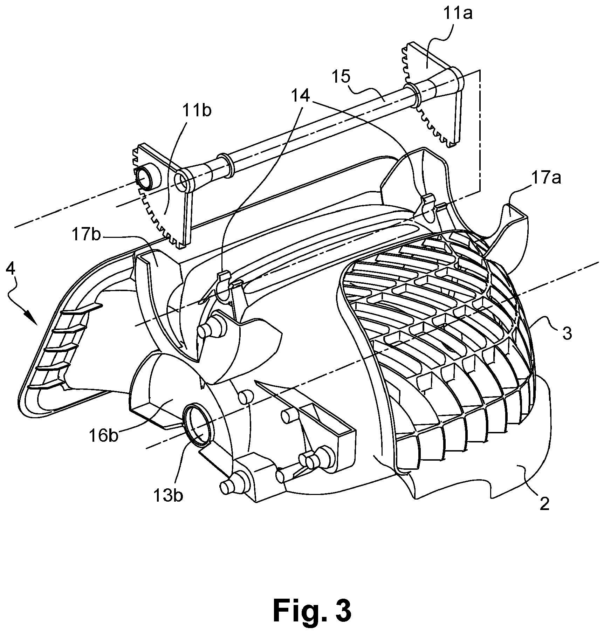

Figure 3 is a further view of the air flow control device showing a double gear shaft according to one or more embodiments of the invention.

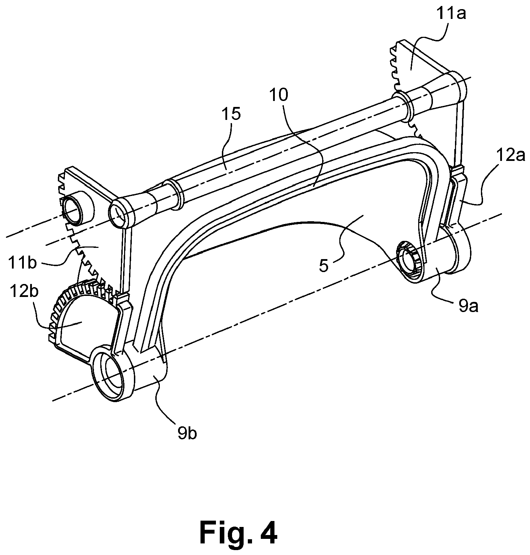

Figure 4 is a view of the first flap and the double gear shaft according to one or more embodiments of the invention.

As it may be observed in the figures, the present invention relates to an air flow control device 1 regulating the opening and closing of at least one air circulation channel in a heating, ventilation and/or air conditioning installation (HVAC). Such air flow control device 1 is particularly employed for air intake equipment in HVAC installations.

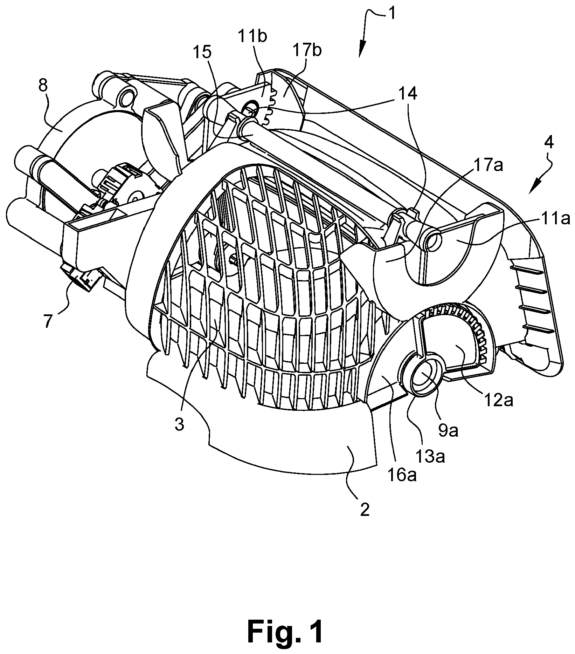

As it can be seen on figure 1, the air flow control device 1 comprises a housing 2. In this embodiment, the housing is an air intake housing. The housing comprises a first and a second aperture 3 ; 4 making it possible for air to enter the air flow control device 1, more particularly to enter an air circulation channel of the air flow control device 1. In one or more embodiments, the first aperture 3 permits the intake of a flow of recycled air and is called recycled air aperture. In one or more embodiment, the second aperture 4 permits the intake of a flow of fresh air to enter the air control device and is called a fresh air aperture. The flow of fresh air is captured directly from outside the vehicle while the flow of recycled air derives from within the interior of the vehicle.

The first and second apertures 3 ; 4 comprise a portion of sealing, in particular on a surrounding area of the apertures 3 ; 4 (not visible on the figures).

A first and a second flap 5 ; 6 are supported by the housing 2 and are inserted within the housing 2. Each of the first and second flap 5 ; 6 can open and close the at least one of the the first and second apertures 3 ; 4. The second flap 6 fits inside the first flap 5 and the first and second flaps 5 ; 6 have a common swivel axis.

Each of the first and second flap 5 ; 6 is capable of displacement between two distinct extreme positions. In such two extreme positions, each of the first and second flap 5 ; 6 operate to close and/or open one of the recycled or fresh air aperture. By mean of an example, in a first extreme position, the first aperture 3 is closed by the first flap 5 and the second aperture 4 is open. Consequently the flow of fresh air feeds the air flow control device 1. The flow of recycled air cannot enter the air flow control device 1. In a second extreme position the second aperture 4 is closed by the first flap 5. Consequently the flow of fresh air cannot enter air flow control device 1. The flow of recycled air feeds the air flow control device 1. Alternative positions make possible the simultaneous feed of fresh and recycled air into the air flow control device 1. According to the positions of the first and second flaps 5 ; 6, the first and second apertures 3 ; 4 are open to a greater or lesser extent leading to a flow of fresh air or flow of recycled air being to a greater or lesser extent powerful. In other words, each of the first and second flap 5 ; 6 is configured to regulate an opening degree of the air circulation channel.

The air flow control device 1 comprises at least one actuator 7 configured to actuate each of the first and second flap 5 ; 6 between their respective extreme positions. Such actuator 7 may be an electric motor or stepper motor.

A torque transmission system 8 is configured to transmit a torque from the at least one actuator 7 to each of the first and second flap 5 ; 6 via several levers and gear levers.

According to the invention, the torque transmission system 8 is configured to transmit the torque on two driven locations 9a ; 9b of at least one of the first and second flap 5 ; 6, the two driven locations 9a ; 9b being symmetrical in relation to a middle of said flap 5 ; 6. In the illustrated embodiment, the torque transmission system 8 is configured to transmit the torque on two driven locations 9a ; 9b of the first flap 5. Nevertheless, embodiments wherein the torque transmission system 8 is configured to transmit the torque on two driven locations of the second flap 6, or on two driven locations 9a ; 9b of the first flap 5 and two driven locations of the second flap 6 are also covered by the invention.

In the illustrated embodiment, the first flap 5 comprises sealing elements entering in contact with the edge of the first and second apertures. Sealing elements are for example made from elastomeric material such as foam or rubber and are for example sealing lips 10.

The torque is transmitted symmetrically from a first driven location 9a of the first flap 5 to a second driven location 9b of the first flap 5. Thereby the sealing lip 10 of the first flap 5 is also pressed symmetrically to an edge of the recycled air aperture. The air tightness is improved.

In the illustrated embodiment, the torque transmission system 8 comprises at least two actuating gear segments 11a ; 11b and at least two actuated gear segments 12a ; 12b actuated by the actuating gear segments 11a ; 11b. The torque transmission system 8 comprises in addition a cam track (not visible on the figures). Alternative torque transmission system components, such as drive belts may be included in the torque transmission system 8, as a replacement of the actuating and actuated gears or additionally to the actuating and actuated gears.

A first actuating gear segment 11a is located at the first driven location of the first flap 5 and a second actuating gear segment 11b is located at the second driven location of the first flap 5. A first actuated gear segment 12a is located at the first driven location of the first flap 5 and a second actuated gear segment 12b is located at the second driven location of the first flap 5. It can be seen that the first and second driven locations 9a ; 9b are opposite locations of the first flap 5.

A first bearing 13a is located at the first driven location 9a of the first flap 5 and a second bearing 13b is located at the second driven location 9b of the first flap 5. The torque is thereby transmitted symmetrically from a first bearing 13a side to a second bearing 13b side.

In the illustrated embodiment, the torque transmission system 8 comprises a shaft 15. The first driven location 9a is symmetrical to the second driven location 9b in relation to a middle of the shaft 15. In other words, the shaft 15 extends in a longitudinal direction between two ends of the shaft 15, on a length of the shaft 15 and the first driven location 9a is symmetrical to the second driven location 9b in relation to a middle of the length of the shaft 15. The first actuating gear segment 11a is attached at a first end of the shaft 15 and the second actuating gear segment 11b is attached at a second end of the shaft 15, thereby forming is a double gear shaft 15 that couples the first and second actuating gear segments 11a ; 11b. The displacement of closing and opening of the first flap 5 is achieved through the movement of the coupled first and second gear segments.

In the illustrated embodiment, the first and second flaps 5 ; 6 have the shape of a portion of a hollow right circular cylinder, the first and second flaps's 5 ; 6 common swivel axis defining a height of the right circular cylinder. It shall be understood that the definition of a swivel axis of the flaps 5 ; 6 does not necessarily implies the presence of a physical axis. The first driven location 9a is symmetrical to the second driven location 9b in relation to a middle of the common swivel axis. In other words, the common swivel axis extends in a longitudinal direction between two ends of the swivel axis, on a length of the swivel axis and the first driven location 9a is symmetrical to the second driven location 9b in relation to a middle of the length of the swivel axis. The first actuated gear segment 12a is attached on a first end of the common swivel axis and the second actuated gear segment 12b is attached on a second end of the common swivel axis.

In the illustrated embodiment, the first bearing 13a is located at the first end of the common swivel axis and the second bearing 13b is located at the second end of the common swivel axis. The shaft 15 extends parallel to the common swivel axis and traverses the swiveling width of the first and second flaps 5 ; 6.

In the illustrated embodiment, the double gear shaft 15 is clipped into clip elements functioning as well as shaft bearing towers 14. The actuated gear segments 12a ; 12b of the first flap 5 are located in recessed areas 16a ; 16b, formed as an integral part of the housing 2. This allows rotation of the actuated gear segments 12a ; 12b as required cinematically. The recesses 16a ; 16b form a safeguard. The actuating gear segments 11a ; 11b rotate in sleeves 17a ; 17b formed as an integral part of the housing 2. Each of the sleeves 17a ; 17b comprises an opening. This allows each actuating gear segment 11a ; 11b of the shaft 15 to be engaged with the corresponding actuated gear segment 12a ; 12b of the first flap 5.

It is understood that the air flow control device 1 according to the invention achieves perfect hermeticity to air and ensures perfect closure of the apertures 3 ; 4. The closure of the apertures is achieved through precise conjoint operation between the flap 5 ; 6 and the edge of the aperture 3 ; 4, on the whole length and radius of the flap 5 ; 6. Hermetic sealing to air is thereby ensured. Any escape of air between the flap 5 ; 6 and the edge of the aperture is prevented.

## Claims

1. Air flow control device (1), in particular for a heating, ventilation and/or air conditioning installation for automotive vehicles comprising :
- an air circulation channel,
- a movable flap (5 ; 6) positioned in the air circulation channel, to regulate an opening degree of the air circulation channel,
- at least one actuator (7) configured to actuate the flap (5 ; 6) between a position wherein the air circulation channel is opened and a position wherein the air circulation channel is closed,
- a torque transmission system (8), configured to transmit a torque from the at least one actuator (7) to the flap (5 ; 6),
**characterized in that** the torque transmission system (8) is configured to transmit the torque on two driven locations (9a ; 9b) of the flap (5 ; 6), the two driven locations (9a ; 9b) being symmetrical in relation to a middle of the flap (5 ; 6).

2. Air flow control device (1) according to claim 1, in which the torque transmission system (8) comprises at least two actuating gear segments (11a ; 11b) and at least two actuated gear segments (12a ; 12b) actuated by the actuating gear segments (11a; 11b), the actuating gear segments (11a ; 11b) being located at each one of the two driven locations (9a ; 9b) and the actuated gear segments (12a ; 12b) being located at each one of the two driven locations (9a ; 9b).

3. Air flow control device (1) according to any of the preceding claims, in which a first actuating gear segment (11a) is located at a first driven location (9a) of the flap (5 ; 6) and a second actuating gear segment (11b) is located at a second driven location (9b) of the flap (5 ; 6), a first actuated gear segment (12a) being located at the first driven location (9a) of the flap (5 ; 6) and a second actuated gear segment (12b) being located at the second driven location (9b) of the flap (5 ; 6).

4. Air flow control device (1) according to any of the preceding claims, in which the flap (5 ; 6) has at least one bearing (13a ; 13b), in particular two bearings (13a ; 13b), the at least one bearing (13a ; 13b) being located at one of the driven locations (9a ; 9b).

5. Air flow control device (1) according to the preceding claim, in which a first bearing (13a) is located at the first driven location (9a) of the flap (5 ; 6) and a second bearing (13b) is located at the second driven location (9b) of the flap (5 ; 6).

6. Air flow control device (1) according to any of the preceding claims, in which the flap (5 ; 6) has the shape of a portion of a hollow right circular cylinder having a swivel axis, the two driven locations (9a ; 9b) being symmetrical in relation to a middle of the swivel axis.

7. Air flow control device (1) according to claim 6 and claim 2, in which the at least two actuated gear segments (12a ; 12b) are attached on each ends of the swivel axis of the flap (5 ; 6).

8. Air flow control device (1) according to the preceding claim, in which the first actuated gear segment (12a) is attached on a first end of the swivel axis and the second actuated gear segment (12b) is attached on a second end of the swivel axis.

9. Air flow control device (1) according to one of claims 6 to 8 in which a second flap (6) fits inside the flap, called first flap (5) and the first and second flaps (5 ; 6) have a common swivel axis, the torque transmission system (8) being configured to transmit the torque to the second flap (6).

10. Air flow control device (1) according to the preceding claim, the torque transmission system (8) is configured to transmit the torque on two driven locations (9a ; 9b) of the second flap (6), the two driven locations (9a ; 9b) being symmetrical in relation to a middle of the second flap (6).
